# EUROPÄISCHE PATENTSCHRIFT

(11) **EP 1 337 900 B1**
(45) Veröffentlichungstag und Bekanntmachung des Hinweises auf die Patenterteilung: **26.05.2004**
(21) Anmeldenummer: 01998869.0
(22) Anmeldetag: 03.12.2001
(51) Int. Cl.: G06C 1/00

(54) **SCHALTUNGSANORDNUNG**
SCHALTUNGSANORDNUNG
SYSTEME DE CIRCUIT

(30) Priorität: 01.12.2000 DE 10061259
(43) Veröffentlichungstag der Anmeldung: 27.08.2003
(73) Patentinhaber: Fraunhofer-Gesellschaft zur Förderung der angewandten Forschung e.V., 80686 München (DE)
(72) Erfinder: BRÄUER, Andreas, 07646 Schlöben (DE); BUSS, Wolfgang, 07747 Jena (DE); SCHREIBER, Peter, 07749 Jena (DE); KARTHE, Wolfgang, 07745 Jena (DE); WÄCHTER, Christoph, 07743 Jena (DE)
(74) Vertreter: Pfenning, Meinig & Partner
(86) Internationale Anmeldenummer: PCT/EP2001/014070
(87) Internationale Veröffentlichungsnummer: WO 2002/044826

(56) Entgegenhaltungen:
- US-A- 5 138 687
- US-A- 5 835 458
- ACHATZ V ET AL: "Integrated optical switches on InP for network configuration and distribution" ELECTRONIC COMPONENTS AND TECHNOLOGY CONFERENCE, 1993. PROCEEDINGS., 43RD ORLANDO, FL, USA 1-4 JUNE 1993, NEW YORK, NY, USA,IEEE, 1. Juni 1993 (1993-06-01), Seiten 725-728, XP010106156 ISBN: 0-7803-0794-1
- ROGERS D C ET AL: "Demonstration of programmable optical pulse pattern generator for 100 Gbit/s networks" ELECTRONICS LETTERS, IEE STEVENAGE, GB, Bd. 31, Nr. 23, 9. November 1995 (1995-11-09), Seiten 2001-2002, XP006003614 ISSN: 0013-5194
- PATENT ABSTRACTS OF JAPAN vol. 008, no. 092 (P-271), 27. April 1984 (1984-04-27) & JP 59 007925 A (NIPPON DENKI KK), 17. Januar 1984 (1984-01-17)
- PATENT ABSTRACTS OF JAPAN vol. 018, no. 120 (E-1516), 25. Februar 1994 (1994-02-25) & JP 05 315689 A (NIPPON SHEET GLASS CO LTD), 26. November 1993 (1993-11-26)

## Beschreibung

Die vorliegende Erfindung betrifft eine Schaltungsanordnung zum Schalten und Einkoppeln mindestens eines Eingangslichtbündels in mindestens ein Ausgangskanal einer Mehrzahl von Ausgangskanälen nach dem Oberbegriff des Anspruchs 1.

Das US-Patent 5,729,642 beschreibt eine gattungsgemäße Vorrichtung. Diese zeigt ein "First Substrate 10", welche eine Schaltoptik darstellt. Diese enthält als Schaltelemente "Electro Optical Switches 14a, 14b, 14c", welche sich dem Fachmann z.B. als Mach-Zehnder-Interferometer darstellen. Mehrere einlaufende Eingangslichtbündel werden in diese Schaltoptik -eingeleitet und nach Maßgabe der Schaltelemente in Ausgangskanalwellenleiter eingekoppelt. Der Schaltoptik ist eine Umlenkoptik nachgeordnet, welche gebogene bzw. sich kreuzende Kanalwellenleiter enthält, welche jeweils einem Ausgangskanalwellenleiter der Schaltoptik zugeordnet sind. Am anderen Ende der Kanalwellenleiter der Umlenkoptik werden diese (an Ausgangskanälen) wiederum in eine nachgeordnete Schaltoptik eingeleitet.

Die sich kreuzende und Kanalwellenleiter enthaltende Umlenkoptik ermöglicht aufgrund einer speziellen Ausführung der Kanalwellenleiter verhältnismäßig geringe Biegeradien der Kanalwellenleiter. Außerdem sind Kreuzungen der einzelnen Kanalwellenleiter möglich.

Allerdings hat diese Anordnung den Nachteil, daß insbesondere bei einer Vielzahl von Ausgangskanalwellenleitern die Umlenkoptik recht komplex wird.

Das Dokument US 5 138 687 zeigt in Spalte 39, Zeile 40 bis Spalte 40, Zeile 5 bzw. in Fign. 67 und 68 reine Wellenleiterbauelemente, die den "matrix switch" und den "gate circuit" in Fig. 66 verkörpern, d.h. die gesamte "Schaltarbeit" läuft auf der Basis geführter Wellen ab. Diesen Linsenarrays am Eingang bzw. Ausgang dienen hier wiederum nur zur (effizienten) Ein- bzw. Auskopplung des Lichtes und nicht zu einer freiraumoptischen Umlenkung, d.h. einer tatsächlichen Änderung der Ausbreitungsrichtung.

Der vorliegenden Erfindung liegt daher die Aufgabe zugrunde, eine Schaltungsanordnung zu schaffen, welche einerseits schnelle und sichere Schaltvorgänge bei einer hohen Anzahl von Ausgangskanälen ermöglicht, hierbei jedoch einfach aufgebaut ist und einen geringen Raumbedarf hat.

Diese Aufgabe wird durch eine Schaltungsanordnung mit den Merkmalen des Anspruches 1 gelöst.

Dadurch, daß die Umlenkoptik jedem einzelnen Ausgangswellenleiter der Schaltoptik zugeordnete Linsen eines Linsenarrays und/oder zugeordnete Prismen eines Prismenarrays aufweist, wird diese Aufgabe gelöst.

Die hier erstmals angewandte Kombination von kanalwellenleiterspezifischen Schaltelementen (Richtkoppler, Mach-Zehnder-Interferometer, Y-Verzweiger) und modular nachgeschaltet kanalselektiven freiraumoptischen Elementen weist insbesondere für eine Modulbauweise von Schaltoptik und Umlenkoptik besondere Vorteile auf.

In der vorliegenden Anmeldung wird unter "Kanalwellenleitern" eine Vorrichtung zur Führung von Licht in einem senkrecht zur Ausbreitungsrichtung (Hauptführungsrichtung des Lichtes) zweidimensional inhomogenem Brechzahlprofil verstanden. Durch das Brechzahlprofil bleibt der Querschnitt eines Lichtbündels lateral im Bereich weniger Wellenlängen konzentriert. Vorzugsweise ist der Querschnitt des Lichtbündels senkrecht zur Hauptausbreitungsrichtung in keiner Dimension größer als sechs Mal die Wellenlänge des durchgeführten Lichtes (so sollte z.B. der Durchmesser des Lichtbündels bei Licht mit einer Wellenlänge von 1,55 µm weniger als 9,3 µm betragen). Insgesamt sollte der Durchmesser des Lichtbündelts nicht mehr als 10 µm betragen.

Unter Kanalwellenleiterschaltern (gleich "Schaltelemente") werden vorliegend Wellenleiterschalter aus Kanalwellenleitern, d.h. mit durchgehend zweidimensionaler Führung des Lichtes in zweidimensional inhomogenem Brechzahlprofil verstanden. Das Schalten wird durch eine lokale Veränderung eines einen Wellenleiter bestimmenden Brechzahlprofils erzielt. In diesen Schaltelementen wird das Licht aus einem eingehenden Kanalwellenleiter auf mindestens zwei Ausgangskanalwellenleiter verteilt. Das Verhältnis der Lichtverteilung ist, bis auf die Schalterverluste, im wesentlichen frei steuerbar. Für den Fachmann ist somit klar, daß es sich hier um Monomodewellenleiterschalter handelt.

Die wesentlichen Vorteile der Erfindung werden dadurch erreicht, daß zur Umlenkung nicht sich kreuzende Kanalwellenleiter verwendet werden, sondern freiraumablenkoptische Elemente verwendet werden. Die Freiraumoptik ist dadurch gekennzeichnet, daß senkrecht zur Ausbreitungsrichtung des Lichtes (bzw. einzelner Strahlen) ein homogener Brechungsindex vorliegt, der sich nur an bzw. in der Nähe von Grenzflächen verschiedener Medien ändert. In diesem Freiraum breitet sich das Licht frei, d.h. ohne Führungseffekt aus. Die lichtablenkende Wirkung der Freiraumablenkoptik wird durch die Gestaltung der Grenzflächen zwischen verschiedenen Medien erreicht.

Die Schaltoptik enthält Schaltelemente, welche z.B. aufgrund von elektro-optisch verursachten Brechzahlbeeinflussungen die Ablenkung bzw. Verzweigung des einfallenden Lichtbündels bestimmen, also Richtkoppler, Mach-Zehnder-Interferometer und Y-Abzweiger. Solche elektro-optischen Schaltelemente, welche Kanalwellenleiter zur Lichtbündelführung verwenden, zeigen etwa aufgrund ihrer begrenzten Winkelablenkung nur eine ungenügende räumliche Trennung einzelner Verzweigungen, und außerdem unzureichende Strahldurchmesser für sich anschließende Empfänger. Die nachgeschaltete Umlenkoptik ermöglicht auf kleinem Raum eine für die Weiterverarbeitung notwendige Transformation des ursprünglich einfallenden Lichtbündels mittels herkömmlicher (mikro-)optischer Elemente. Besonders vorteilhaft ist dieser "Hybridaufbau" bei der vorliegenden Erfindung, d.h. daß z.B. elektro-optische Wellenleiterchips (hierunter werden Module mit Kanalwellenleitern und Schaltelementen wie Richtkoppler, Mach-Zehnder-Interferometer und Y-Verzweigern verstanden) als Schaltoptiken nutzbar sind, also Elemente aus der integriert-optischen Kanalwellenleitertechnologie mit konventionellen optischen Elementen wie der Umlenkoptik gekoppelt werden. Diese Kopplung macht die "Schaltoptiken" umfassend nutzbar. Ein wesentlicher Vorteil der Kopplung besteht darin, daß die Umlenkung nicht auf eine, etwa durch die Ebene eines Wellenleiterchips vorgegebene Ebene beschränkt ist, sondern mittels ablenkender Strukturen wie Prismen, dezentrierten Linsen, Gittern oder Reflektoren beispielsweise als Spiegel, eine Ablenkung in zwei Raumrichtungen erlaubt. Ein Hybridaufbau ist nicht selbstverständlich, da vor allem die Fertigungs- als auch die Fügetechniken auf dem Gebiete der Herstellung von integriert-optischen Wellenleiterbauelementen sowie in der (Mikro-)Optik unterschiedlich sind, dies gilt auch für die entsprechenden Fachleute.

Es ergibt sich somit ein kompakter Raumlichtschalter mit einer diskreten Anzahl von Ausgangszuständen, der vergleichsweise einfach herstellbar ist, der ohne mechanisch bewegte Teile auskommt und der hinsichtlich der erreichbaren Winkelablenkungen bzw. Ortsabstände nicht z.B. durch Kanalwellenleiteranordnungen beschränkt ist. Die kompakte Bauform der gesamten Schaltungsanordnung wird außerdem dadurch erreicht, daß Lichtquelle, Schaltoptik sowie Umlenkoptik sich unmittelbar räumlich aneinander anfügen können.

Vorteilhafte Ausgestaltungen der vorliegenden Erfindung werden in den abhängigen Ansprüchen angegeben.

Eine besonders vorteilhafte Ausführungsform sieht vor, daß die Schaltoptik, die Umlenkoptik und/oder eine das Eingangslichtbündel abstrahlende Lichtquelle als Module zur Anbringung auf einem zu der Schaltungsanordnung gehörigen Träger angeordnet sind.

Ein wesentlicher Vorteil besteht in der modularen Struktur des mikrooptischen Raumschalters. Erhebliche Kostenvorteile ergeben sich dadurch, daß der Raumschalter aus weitgehend unabhängigen Modulen besteht, die unter anderem für verschiedene Raumschalterrealisierungen verwendbar sind. Beispielsweise kann eine Anpassung einer bestimmten Schaltoptik bei beizubehaltenden Parametern der Lichtquelle durch die alleinige Veränderung der ausgangsseitigen mikrooptischen Umlenkoptik erreicht werden.

Vorteile des modularen Aufbaus ergeben sich auch dadurch, daß nicht nur die Module in Durchlaufrichtung des Lichtbündels hintereinander austauschbar sind (die Kompatibilität elektronischer Komponenten ist kostengünstiger herstellbar als die mechanischer), es ist auch eine Stapelbarkeit in einer weiteren Raumrichtung möglich. Dies ergibt sich z.B. daraus, daß Kanalwellenleiterebenen gestapelt werden können und somit ein zweidimensionales Feld von Ausgangskanälen ansteuerbar wird (hierbei weist die Schaltoptik neben der Stapelung von z.B. Wellenleiterchips eine vorgelagerte Stufe auf, welche das aus der Lichtquelle kommende Lichtbündel gezielt in einzelne Stapelebenen schalten kann). Dieses selbst ist vorteilhaft für die den Winkel- bzw. räumlichen Abstand in beiden Dimensionen modifizierende, nachgeschaltete Mikrooptik, die als kompakte Zeilen/Spalten-Struktur ausgeführt werden kann.

Der Träger kann aus verschiedenen Materialien bestehen, die wegen der Bearbeitbarkeit, wie bei Metallen, der geringen thermischen Ausdehnungskoeffizienten, wie bei ZERODUR, oder der Wärmeleitfähigkeit Vorzüge aufweisen.

Eine besonders vorteilhafte Ausgestaltung sieht vor, daß der Träger im Wesentlichen aus Silizium besteht bzw. mit Mitteln der Ultrapräzisionsbearbeitung bzw. der Silizium-Mikrotechnik gefertigt ist. Dieser kann aus Stabilitätsgründen, z.B. zum Häusen durch eine Grundplatte ergänzt sein. Besonders vorteilhaft ist hierbei, daß der Träger ein integrierte Ansteuerelektronik bzw. integrierte elektrische Leitungen auf seiner Oberfläche aufweist, welche eine elektrische Verbindung mit auf den Träger aufgebrachten Modulen ermöglicht, welche für ihre Funktion eine elektrische Spannungsversorgung benötigen. Dies ist bei Schaltoptiken der Fall, welche elektro-optisch steuerbare Schaltelemente zur Verzweigung und/oder Ablenkung eines Lichtbündels aufweisen.

Eine weitere vorteilhafte Ausgestaltung sieht vor, daß in der Schaltungsanordnung mehrere Lichtquellen vorgesehen sind, welche Licht gleicher oder unterschiedlicher Wellenlänge emittieren. Hierdurch wird das Einkoppeln zusätzlicher Eingangslichtbündel und damit eine deutlich verbesserte Kapazitätsauslastung der lichtleitenden Elemente erzielt. Hierbei kann (dies gilt auch für Schaltungsanordnung mit lediglich einer Lichtquelle) eine Mikrooptik zur Kollimation bzw. Reflexionsverminderung der aus den einzelnen Lichtquellen ausfallenden Lichtbündeln erzielt werden.

Die Brechzahlbeeinflussung geschieht bei den erfindungsgemäßen Schaltelementen elektro-optisch. Bei der elektro-optischen Variante ist die Brechzahl der Lichtleitabschnitte der einzelnen Schaltelemente nach Maßgabe einer an die Schaltelemente angeschlossenen Spannungsversorgung steuerbar, welche direkt an Kontakte des aus Silizium gefertigten Trägers anbindbar ist. Für die Lichtleitabschnitte kommen hierbei vorteilhaft elektro-optische Kristallmaterialien wie LiNbO₃, LiTaO₃ oder ein elektro-optisches Polymer in Betracht.

Eine besonders vorteilhafte Ausgestaltung sieht vor, daß die der Schaltoptik nachgeordnete Umlenkoptik die Strahlführung aus der Schaltoptik emittierter Lichtbündel so bewerkstelligt, daß sich der räumliche und/oder Winkel-Abstand zweier benachbarter, aus der Schaltoptik kommender Ausgangslichtbündel in mindestens einer Dimension vergrößert. Diese Aufspreizung der Abstände ist durch mehrere Maßnahmen möglich, insbesondere können hierbei Prismen vorgesehen werden, welche in zwei Raumrichtungen eine Ablenkung bewirken, so daß eine besonders große Abstandserweiterung durch die Umlenkoptik möglich wird. Die Umlenkoptik ermöglicht somit aus einer Ebene einfallende, z.B. parallele Lichtbündel mehrdimensional räumlich auszurichten. So ist es möglich, z.B. aus einem ebenen Wellenleiterchip ausfallende benachbarte Lichtbündel in ihrem räumlichen Abstand (in der Wellenleiterchipebene oder senkrecht dazu) zueinander zu vergrößern und gleichzeitig für diese Lichtbündel Winkeländerungen vorzusehen. Außerdem ist mit der erfindungsgemäßen Umlenkoptik gleichzeitig eine Kollimation möglich. Es wird ausdrücklich betont, daß diese Eigenschaften der Umlenkoptik für sämtliche in der Beschreibung gezeigten Ausführungsformen zur Verfügung stehen.

Weitere vorteilhafte Ausgestaltungen der vorliegenden Erfindung werden in den übrigen abhängigen Ansprüchen angegeben.

Die Erfindung wird nun anhand mehrerer Figuren erläutert. Es zeigen:
- Fig. 1: eine perspektivische Darstellung einer erfindungsgemäßen Schaltungsanordnung,
- Fig. 2: die Draufsicht einer Ausführungsform einer erfindungsgemäßen Schaltungsanordnung,
- Fig. 3: eine Detailansicht einer erfindungsgemäßen Umlenkoptik,
- Fign. 4 und 5: weitere Ausführungsformen von erfindungsgemäßen Schaltungsanordnungen.

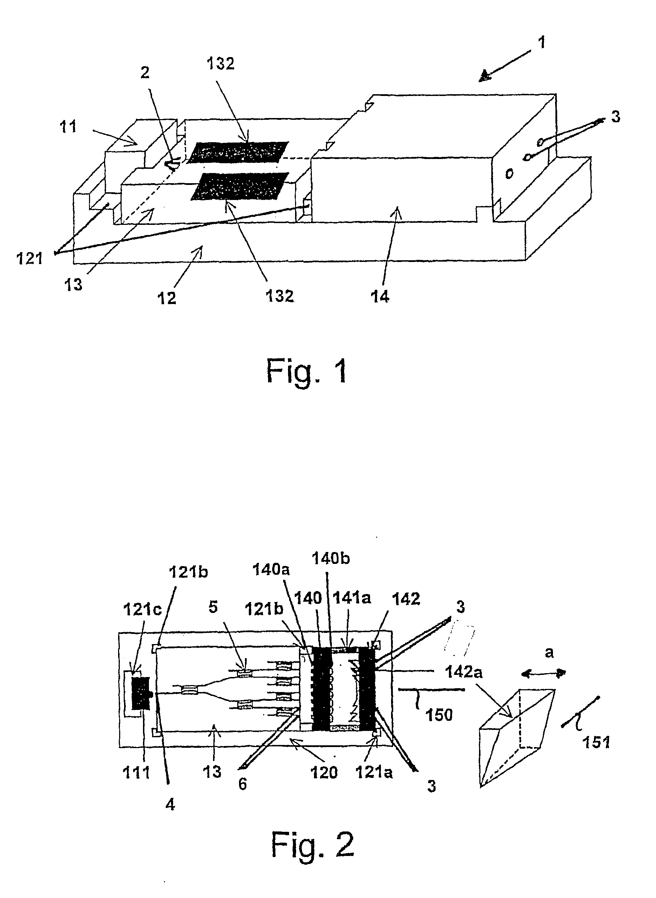

Fig. 1 zeigt eine erfindungsgemäße Schaltungsanordnung 1 zum Schalten und Einkoppeln mindestens eines von mindestens einer Lichtquelle 11 abgestrahlten Lichtbündels 2 in mindestens einen Ausgangskanal 3 einer Mehrzahl von Ausgangskanälen, wobei dem abgestrahlten mindestens einen Lichtbündel 2 eine Schaltoptik 13 zur schaltbaren Verzweigung/Umlenkung des einfallenden Lichtbündels 2 und eine nachgeschaltete Umlenkoptik 14 zur Zuführung zumindest eines Teils des Lichtbündels 2 in den mindestens einen Ausgangskanal 3 zugeordnet ist. Die mindestens eine Lichtquelle 11, die Schaltoptik 13 sowie die Umlenkoptik 14 sind als einzelne Module ausgeführt. Diese sind räumlich im Wesentlichen aneinander angrenzend unbeweglich auf einem zu der Schaltungsanordnung 1 gehörigen Träger 12 angeordnet. Die äußere Lage bzw. der äußere Zustand der Schaltoptik ist vom Schaltzustand unabhängig. Der Träger 12 weist vorzugsweise Halteund Justagestrukturen auf. Diese können unter anderem Nuten, Umfassungs-, Anschlag-, Klemm- oder Federelemente sein, die mit mikrotechnischen Verfahren insbesondere in Silizium geeignet herstellbar sind. Im Folgenden werden diese Elemente zusammenfassend als Umfassungs- oder Halteelemente bzw. -strukturen bezeichnet. Im dargestellten Beispiel sind die Haltestrukturen aus der Trägergrundfläche herausragende Absätze 121, in welche die einzelnen Module im Wesentlichen formschlüssig einfügbar sind. Hieraus ergibt sich bereits eine exakte Positionierung der einzelnen Module zueinander, so daß eine zusätzliche Kalibrierung nicht notwendig ist.

Der Träger 12 besteht im Wesentlichen aus Silizium. Er enthält außerdem eine nicht näher dargestellte integrierte Ansteuerelektronik sowie elektrische Leitungen, welche in dem in Fig. 1 dargestellten Einbauzustand mit elektrischen Kontakten der Lichtquelle 11 sowie der Schaltoptik 13 zur Spannungsversorgung dieser Module verbunden sind. Die elektrische Verbindung wird hierbei durch Aufstecken der Module auf den Träger 12 hergestellt. Somit wird die Spannungsversorgung der Elektroden 132 gewährleistet, welche durch Spannungsänderungen eine Änderung der Brechzahl des dazwischen liegenden Materials und damit Umlenkungen des Lichtbündels 2 verursachen.

Die Verwendung von Silizium als Trägermaterial bietet neben den günstigen elektrischen Eigenschaften, welche auch für Halbleiterbausteine genutzt werden, auch den Vorteil, daß wenn die Schaltoptik 13 mittels thermo-optischer Module schaltbar ist, die Wärmeleitfähigkeit von Silizium sich im Betrieb als günstig erweist.

Die Lichtquelle 11 kann eine Laserdiode, eine LED oder eine Lichtleitfaser sein. Es ist außerdem möglich, mehrere Lichtquellen 11 nebeneinander vorzusehen, welche mehrere Lichtbündel gleicher oder unterschiedlicher Wellenlänge in die Schaltoptik emittieren. Hierbei können die Lichtquellen mit einer Mikrooptik zur Strahltransformation zur Anpassung von Strahlparametern an die nachgeordneten Module für Schaltoptik bzw. Umlenkoptik versehen werden, beispielsweise mit einer Mikrooptik zur Kollimation und/oder Reflexionsverminderung.

Aus der Prinzipdarstellung von Fig. 1 wird klar, daß bei der vorliegenden Erfindung die Module in unmittelbarer Nähe bzw. einander berührend angeordnet sind, wobei die Einzelmodule formschlüssig von dem Träger aufgenommen werden und hierbei bereits der Kontakt zu elektrischen Versorgungsleitungen bzw. einer auf dem Träger angeordneten Ansteuerelektronik hergestellt wird. Dies bietet die Voraussetzungen für eine Miniaturisierbarkeit sowie eine großindustrielle Herstellbarkeit des Trägers sowie der einzelnen Module.

Fig. 2 zeigt eine Draufsicht einer Ausführungsform einer erfindungsgemäßen Schaltungsanordnung. Diese zeigt einen Siliziumträger 120, welcher in einer U-förmigen Umfassung 121c eine Lichtquelle mit vorgeschalteter Mikrooptik 111 zur Emittierung eines Eingangslichtbündels in einen als Lichtleiter ausgeführten Eingang 4 einer Schaltoptik 13 aufweist. Die Schaltoptik 13 ist vorliegend als Wellenleiterchip ausgeführt, der die Ablenkung des einfallenden Eingangslichtbündels durch Schaltelemente 5 realisiert. Die Schaltoptik bzw. der Wellenleiterchip 13 weist also einen als Kanalwellenleiter ausgeführten Eingang 4 für das mindestens eine Eingangslichtbündel 2 auf. An diesen Eingang schließen sich, vorliegend als Richtkoppler 5 ausgeführte, binäre Schaltelemente zur Verzweigung und/oder Ablenkung des durch den Eingang 4 einfallenden Lichtbündels sowie den Schaltelementen nachgeordnete Ausgänge 6 auf, welche ebenfalls als Kanalwellenleiter ausgeführt sind.

Der Träger 120 weist als Umfassungselemente ausgeführte Justagestrukturen 121b zur definierten Fixierung des Wellenleiterchips 13 auf (entsprechend den Umfassungselementen 121a und 121c für die übrigen Module).

Die Schaltoptik 13 in Fig. 2 ist als "1 auf 8"-Schaltung ausgeführt, d.h. daß ausgehend von einem einzigen Eingang 4 nach Maßgabe der Schaltelemente 5 acht Ausgänge 6 zur Ausleitung zumindest eines Teils des durch den Eingang 4 eingeworfenen Lichtbündels zur Verfügung steht. Die Schaltelemente 5 können hierbei als Richtkoppler, aber auch als Y-Verzweiger oder Mach-Zehnder-Interferometer ausgeführt sein. Mach-Zehnder-Interferometer, Y-Verzweiger sowie einfacher Richtkoppler haben gemeinsam, daß an ihren Verzweigungen das Verhältnis der Lichtverteilung nach diesem Element beliebig einstellbar ist, d.h. daß eine alternative Schaltung eines abgehenden Zweiges oder eine gleichmäßige Verteilung in beide Zweige nach Art eines passiven Strahlteilers möglich ist. Unabhängig von der Art der Schaltung erfolgt die Ausgabe von Licht aus der Schaltoptik 13 durch Ausgangskanalwellenleiter 6. Die Schaltung der Schaltelemente 5, welche einfallende Lichtbündel verzweigen und/oder ablenken erfolgt durch Änderung der Brechzahl von Lichtleitabschnitten der Schaltelemente. Die Steuerung der Änderung der Brechzahl der Lichtleitabschnitte kann hierbei auf verschiedene Weisen erfolgen (diese Aufzählung gilt selbstverständlich genauso für die in den Fign. 1, 4 und 5 gezeigten Ausführungsformen) :
- Die Brechzahl der Lichtleitabschnitte der einzelnen Schaltelemente 5 kann nach Maßgabe einer an die Schaltelemente angeschlossenen Spannungsversorgung steuerbar sein. Diese ist direkt an elektrische Anschlüsse des Siliziumträgers 120 bzw. die darin befindliche Ansteuerungselektronik angeschlossen. Die Lichtleitabschnitte der Schaltelemente sind hierbei vorteilhafterweise aus einem elektro-optischen Kristallmaterial wie LiNbO₃, LiTaO₃ oder einem elektro-optischen Polymer. Der wesentliche Vorteil von Schaltelementen, welche auf dem elektro-optischen Effekt basieren, sind die sehr kurzen Schaltzeiten. Integriert-optische Mach-Zehnder-Interferometer in LiNbO₃ erreichen eine Modulationsfrequenz von 10 GHz, ähnliche Schaltfrequenzen werden auch mit elektro-optischen Polymeren erreicht. Reflektoren auf der Basis von Bragg-Gittern oder der Totalreflexion an Grenzflächen (total internal reflection - TIR) lassen sich ebenfalls zur Umschaltung zwischen Kanalwellenleitern verwenden. Aufgrund der begrenzten Brechzahldifferenzen, die beispielsweise in elektro-optischen Materialien wie LiNbO₃ erzielbar sind, sind mittels TIR nur geringe Ablenkwinkel möglich. Bragg-Reflektoren sind für weite Bereiche von Ablenkwinkeln realisierbar, verlangen dafür aber komplizierte Elektrodengeometrien und haben eine limitierte optische Bandbreite.
- Es ist auch möglich, daß die Brechzahl der Lichtleitabschnitte der einzelnen Schaltelemente nach Maßgabe einer an die Schaltelemente angeschlossenen Wärmequelle thermo-optisch steuerbar ist. Hierbei können Brechzahldifferenzen genutzt werden, die thermo-optisch beispielsweise in Polymeren oder Silica-on-Silicon-Schichten erzeugt werden. Diese thermo-optischen Schalter sind in sehr kompakter, integriert optischer Bauform kostengünstig herstellbar und sind insbesondere geeignet, wenn Schaltzeiten im Bereich von Millisekunden ausreichend sind.
- Die Brechzahl der einzelnen Schaltelemente kann auch nach Maßgabe einer an die Schaltelemente angeschlossenen Schwingungsquelle (z.B. einem entsprechenden kristallinen Medium) akusto-optisch steuerbar sein.

Unabhängig von der Wirkungsweise (elektrisch, thermisch, akustisch) der Schaltelemente sind die erreichbaren Orts- und Winkeländerungen insbesondere durch Grenzen der minimalen Krümmungsradien in Wellenleitern gegeben, so daß sich lediglich geringe Abstände an den Ausgangskanalwellenleitern 6 der Schaltoptik 13, welche zusätzlich mit einer Mikrooptik zur Reflexionsverminderung bzw. Kollimation versehen sein kann, ergeben.

Daher schließt sich an die Schaltoptik 13 nachgeordnet eine Umlenkoptik 14 an, welche unter anderem dazu dient, daß der Abstand von Ausgangskanälen 3 untereinander größer ist als der Abstand der Ausgangskanalwellenleiter 6 untereinander, um somit ein eindeutigeres Schaltsignal und eine sicherere Weiterverarbeitung des Schaltsignals gewährleisten zu können. Die Umlenkoptik erfüllt aber auch neben der Strahlaufspreizung die Aufgabe der Strahlkollimation bzw. Strahltransformation, insbesondere dann, wenn in der Schaltoptik 13 die Ausgänge 6 als Kanalwellenleiter mit geringen Strahlquerschnitten ausgeführt sind und die Schaltoptik keine nachgeschaltete Vorrichtung zur Kollimation bzw. Transformation aufweist.

Zur Realisierung der Strahlablenkung bzw. -aufspreizung in der Umlenkoptik finden Prismen, Linsen, Gitter und Spiegel etc. sowohl als einzelne Funktionselemente wie auch in Arrayform Verwendung. Die Ablenkung kann in horizontaler Richtung beispielsweise in einer zur Anordnung der Ausgangskanalwellenleiter 6 parallelen Ebene erfolgen. (Besonders vorteilhaft ist die mikrooptische Strahlablenkung dahingehend, daß sie die typische Beschränkung des Lichtweges im Schaltelement in eine, 13, oder mehrere, 1300, Ebenen aufheben kann, was die Freiheitsgrade einer real zweidimensionalen Ablenkung ermöglicht.)

Die optisch wirksamen Flächen der Umlenkoptik 14 werden vorzugsweise durch bekannte mikrotechnische Verfahren hergestellt, z.B. die Präparation von Linsen durch Schmelztechniken, die Herstellung von Linsen durch den Ionenaustausch, das Prägen von Linsen, Prismen oder Gittern in Polymermaterialien, die Herstellung refraktiver bzw. diffraktiver Flächen durch lithographische Methoden sowie den ein- oder mehrseitigen Reaktionsguß.

Die Umlenkoptik 14 kann weitere optische Funktionsflächen enthalten, die zur weiteren Strahltransformation sowie Reflexionsverminderung entsprechend den Anforderungen einer definierten Empfängerseite, welche aus den Ausgangskanälen 3 einfallende Lichtbündel aufnimmt, dienen.

Die Umlenkoptik setzt sich damit, in Abhängigkeit von der Komplexität der zu realisierenden Strahltransformationen, aus mehreren, vorzugsweise mikrotechnisch gefertigten Komponenten zusammen. Hierbei werden die durch mikrotechnische Herstellverfahren kleinen Dimensionen genutzt. Vorzugsweise enthalten die Komponenten neben den optischen Funktionsflächen auch Mittel die zur gegenseitigen Positionierung bzw. zur Positionierung zum Träger (12 bzw. 120) vorgesehen sind, um die Toleranzen zur Sicherung der optischen Funktion einzuhalten.

Nach Schilderung dieser Grundlagen erfolgt die Detailbeschreibung der Umlenkoptik 14 aus Fig. 2:

Die Umlenkoptik 14 ist als Modul von Umfassungs- bzw. Halteelementen 121a und 121b festgelegt, welche die fluchtende Ausrichtung von Linsen eines Linsenarrays 140a zu den Ausgangskanalwellenleitern 6 der Schaltoptik 13 sicherstellt. Den Linsen des Linsenarrays 140a sind, durch einen Abstandshalter ("Spacer") 140 getrennt, jeweils größere Linsen eines Linsenarrays 140b zugeordnet. Getrennt durch einen weiteren Spacer 141a sind den einzelnen Linsen des Linsenarrays 140b jeweils Einzelprismen 142a zugeordnet.

Ein aus dem Kanalwellenleiterausgang 6, welcher als Wellenleiter ausgeführt ist, heraustretendes Lichtbündel wird durch Durchlaufen einer zugeordneten Linse des Linsenarrays 140a und anschließendes Durchlaufen einer Linse des Linsenarrays 140b kollimiert bzw. transformiert. Daraufhin wird dieses Lichtbündel zu einem zugeordneten Prisma 142a gelenkt, welches das Lichtbündel zu einem zugeordneten Ausgangskanal 3 führt.

Hierbei haben die Einzelprismen 142a der Prismenarraystruktur 142 hauptsächlich die Funktion, eine Abstandsvergrößerung für durchlaufende Lichtbündel benachbarter Ausgänge 6 zu erreichen. Zwar wäre eine Vergrößerung der Abstände 6 auch innerhalb der Schaltoptik 3 prinzipiell möglich, allerdings würde dies, da die Ablenkwinkel bei der Verzweigung insbesondere von Kanalwellenleitern begrenzt sind und Kanalwellenleiterkrümmungsbereiche im Verhältnis zur Lateralausdehnung sehr lang sein müssen, zu einer großen Baulänge der Schaltoptik 13 führen, welche der erfindungsgemäß gewünschten Miniaturisierung zuwider läuft. Es ist daher mit der erfindungsgemäßen Umlenkoptik möglich, auf sehr kurzer Länge eine ausreichende Aufspreizung der Abstände der Kanalwellenleiterausgänge 6 hin zu den Abständen der Ausgangskanäle 3 zu erreichen.

Dies wird bei der Prismenarraystruktur 142 dadurch erreicht, daß die bezüglich einer Achse 150 im Wesentlichen symmetrische Prismenarraystruktur von Einzelprisma zu Einzelprisma zu den Außenseiten hin einen verstärkten Ablenkungswinkel erzeugt, so daß eine "Auffächerung" der Abstände erreicht wird.

Dies geschieht zum einen in der Blattebene. Es ist jedoch, wie die perspektivische Darstellung des Prismas 142a zeigt, möglich, durch Ablenkung des einfallenden Lichtbündels eine weitere Ablenkung aus der Blattebene heraus zu erreichen. Hierzu ist vorgesehen, daß das Prisma 142a entlang seiner auf der Blattebene stehenden Vertikalachse 151 eine lineare Verringerung seiner Seitenbreite a erfährt. Diese Veränderung der Breite a innerhalb des Prismas kann bei benachbarten Prismen z.B. von der Mitte nach außen wandernd jeweils stärker ausgeprägt sein, so daß es zur Erzeugung von vergrößerten Abständen der benachbarten Ausgangskanäle 3 in Richtung senkrecht zur Blattebene kommt. Die Veränderung der Breite a bei benachbarten Prismen muß jedoch nicht von der Mitte nach außen wandernd jeweils stärker ausgeprägt sein, es sind auch z.B. für verschiedene Prismen gleiche Veränderungen oder auch zwischen solchen Prismen liegende "Ausreißerprismen" oder periodisch variierende oder alternierende und andere Breitenänderungen möglich, welche zum Zwecke der Abstandsvergrößerung jeweils benachbarter Lichtbündel wahlweise eine stärkere oder schwächere Veränderung von a aufzeigen als benachbarte Prismen.

Selbstverständlich sind Variationen dieser Umlenkoptik möglich, beispielsweise können den Prismen nachgeordnet refraktive oder diffraktive Funktionsflächen vorgesehen werden, oder die Ablenkung wird mit Gittern, Spiegeln oder geeigneten brechenden Flächen realisiert.

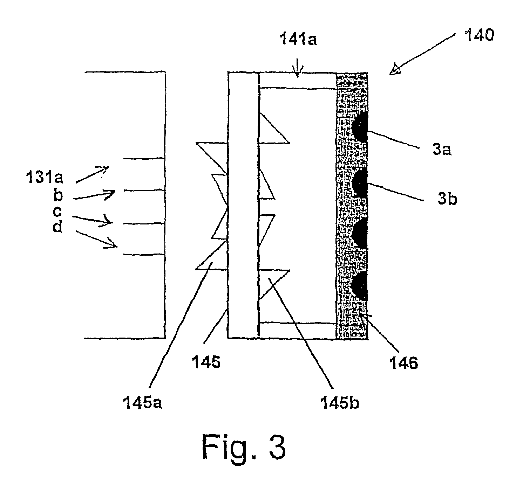

Fig. 3 zeigt eine weitere Ausführungsform einer erfindungsgemäßen Umlenkoptik 140 in der Draufsicht. Hierbei sind vier als Kanalwellenleiter ausgeführte Ausgänge 131a bis 131d eines Wellenleiterchips gezeigt, welche zueinander einen für die Weiterverarbeitung ungenügenden Abstand aufweisen. Durch die Prismenanordnung 145, welche durch einen Spacer getrennte Prismenpaare 145a und 145b aufweist, welche parallele Grenzflächen bilden, wobei die Grenzflächen bezüglich der Achse 150 nach außen hin größere Winkel gegenüber dem Spacer einnehmen, wird erreicht, daß zwei Lichtbündel, welche aus den benachbarten Ausgängen 131a und 131b entstammen, durch die Prismenanordnung 145 so voneinander entfernt werden, daß sie bei Ankunft im Ausgangskanal (das Lichtbündel aus Ausgang 131a kommt bei Ausgangskanal 3a, das Lichtbündel aus Ausgangs 131b kommt bei Ausgangskanal 3b an) einen größeren Abstand aufweisen als die Ausgänge 131a und 131b.

Hierbei findet durch das Array 146 eine im Bereich der Ausgangskanäle liegende, diesen unmittelbar vorgelagerte Strahlkollimation statt. Das Array 146 enthält Mikrolinsen, welche durch Ionenaustausch in Glas hergestellt sind. Zwischen der Prismenanordnung 145 und dem Array 146 ist zur Abstandswahrung ein Spacer 141a vorgesehen.

Zur Aberrationsverminderung bzw. zur Kollimation können weitere mikrooptische Bauelemente, vorzugsweise Mikrolinsenarrays, dem Prismenarray 145 vor- oder nachgeschaltet werden, welche jedoch immer den Ausgangskanälen 3 vorgelagert sind.

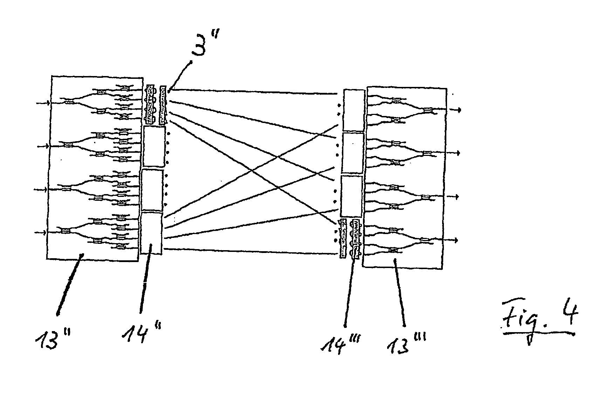

Figur 4 zeigt eine weitere Ausführungsform einer erfindungsgemäßen Schaltungsanordnung. Diese zeigt eine Schaltoptik 13", welche im Aufbau der Schaltoptik 13 im wesentlichen entspricht, allerdings sind hier insgesamt vier Eingangskanalwellenleiter gezeigt. Dieser Schaltoptik 13" ist eine Umlenkoptik 14" aus vier Modulen nachgeschaltet. Diese weisen einen Aufbau analog der Umlenkoptik aus Figur 2 auf, also jeweils den Ausgangskanalwellenleitern zugeordnete Einzelmikrolinsen eines Linsenarrays, nachgeordnet und durch einen Spacer getrennt weitere zugeordnete Linsen eines weiteren Linsenarrays und durch einen weiteren Abstand wiederum getrennt ein Prismenarray mit einzelnen zugeordneten Prismen, welche die durchgeführten Lichtbündel an Ausgangskanälen 3" entlassen.

Die Prismen sind so ausgerichtet, daß die aus den Ausgangskanälen 3" ausfallenden Lichtbündel auf zugeordnete Lichtbündel einer analog zur Umlenkoptik 14" aufgebauten Umlenkoptik 14"' auftreffen. Hierbei durchlaufen diese zunächst zugeordnete Prismen eines Prismenarrays sodann im Abstand Linsen eines Linsenarrays sowie in einem weiteren Abstand nochmals zugeordnete Linsen eines Linsenarrays, um dann jede der abschließenden Linsen der Umlenkoptik 14"' zugeordneten Eingangskanalwellenleitern einer Schaltoptik 13"' zugeführt zu werden. Diese ist in ihrem Aufbau ähnlich wie die Schaltoptik 13" (allerdings mit weniger Schaltelementen) aufgebaut und mündet schließlich in vier austretende Kanalwellenleiter.

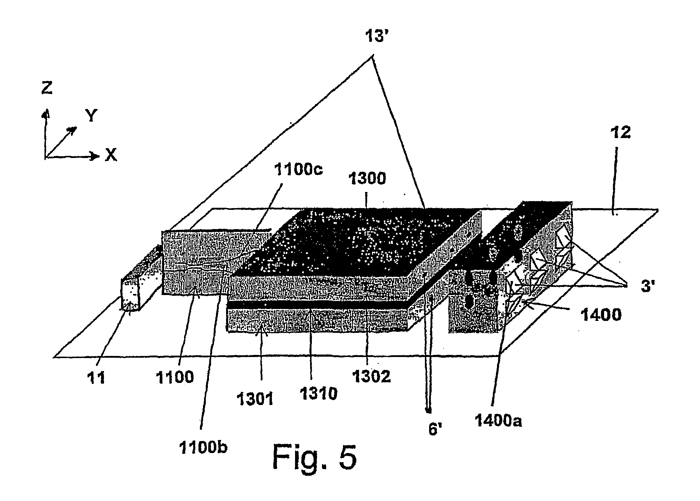

Fig. 5 zeigt eine weitere Ausführungsform einer erfindungsgemäßen Schaltungsanordnung. Diese zeigt in perspektivischer Darstellung einen Träger 12, auf welchem eine Lichtquelle 11 angebracht ist. Dieser Lichtquelle nachgeordnet ist eine Schaltoptik 13'. Diese Schaltoptik 13' hat direkt der Lichtquelle 11 nachgeordnet einen Wellenleiterchip 1100, welcher an dem Eingang 4' das der Lichtquelle entstammende Lichtbündel aufnimmt und dieses in der X-Z-Ebene an einen oder beide der Zwischenausgänge 1100b und 1100c in ein Stapelelement 1300 übergibt. Der Wellenleiterchip 1100 enthält Kanalwellenleiter und hat als Schaltelement einen Richtkopplerschalter. Es ist somit möglich, nach Maßgabe einer zu dem Träger 12 gehörenden Steuerelektronik dieses Schaltelement als passiven Strahlteiler (Weitergabe von Anteilen des Einganglichtbündels in einem gewünschten Verhältnis) oder als alternativen Schalter (Weiterleitung in lediglich einen der Zwischenausgänge 1100b oder 1100c) zu schalten. Dem Wellenleiterchip 1100 zur Vertikalverteilung ist das zur Schaltoptik 13' gehörendes Stapelelement 1300 nachgeordnet. Dieses Stapelelement 1300 besteht aus zwei aufeinander liegenden Wellenleiterebenen 1301 und 1302 mit Kanalwellenleitern und dazwischen angeordneten Schaltelementen wie Richtkopplern, Mach-Zehnder-Interferometer und Y-Verzweigern zur Verzweigung bzw. Ablenkung eingeleiteter Lichtbündel in der X-Y-Ebene. Diese Wellenleiterebenen 1301 und 1302 sind durch eine Pufferschicht 1310 elektrisch voneinander getrennt. Die Wellenleiterebenen 1301 und 1302 sowie die Pufferschicht können sowohl mit Mitteln der Wellenleiterherstellung monolithisch integriert sein, als auch als einzelne Elemente gefertigt und hybrid integriert sein. Im letzteren Falle enthalten die Schichten zusätzliche Mittel, um die gegenseitige Justage zu ermöglichen. Die Wellenleiterebenen 1301 und 1302 haben jeweils einen dem Wellenleiterchip 13 aus Fig. 2 analogen Aufbau, mit der Ausnahme, daß sie einen Eingang und jeweils nur drei Ausgänge aufweisen (Die sinngemäße Erweiterung auf andere Zahlen von Ein- und/oder Ausgangskanälen ist offensichtlich). Die in Fig. 5 nicht dargestellten Eingänge für Lichtbündel sind an die Zwischenausgänge 1100c (für die Wellenleiterebene 1302) und 1100b (für die Wellenleiterebene 1301) angeschlossen. Die Wellenleiterebene 1301 und 1302 sind jeweils mit einer im Träger angeordneten Ansteuerelektronik verbunden (mit derselben Ansteuerelektronik mit der auch der Wellenleiterchip 1100 verbunden ist). Somit ist es möglich, nach Maßgabe der Ansteuerelektronik ein in den Eingang 4' einfallendes Lichtbündel gezielt zu einem oder mehreren der sechs Ausgangskanalwellenleiter 6' der Schaltoptik 13' (bzw. der Wellenleiterebenen 1301 und 1302) zu schalten.

In einer anderen Ausführungsform ist es auch möglich, die Schaltoptik 13' anstatt durch eine Reihenschaltung des vertikalen Chipelementes 1100 und des Stapelelement 1300 als ein einziges integriertes Bauteil vorzusehen.

Der Schaltoptik 13' nachgeordnet ist eine Umlenkoptik 1400. Diese kann dieselben Eigenschaften aufweisen wie die in den vorherigen Figuren gezeigten Umlenkoptiken, insbesondere Kollimation, Erweiterung der Abstände aus den Ausgängen 6' austretender Lichtbündel etc. Im Bereich der Ausgangskanäle 3', welche jeweils einzelnen Ausgängen 6' zugeordnet sind, ist jeweils ein als Umlenkvorrichtung ausgeführtes Prisma zugeordnet. Die Prismen sind in einem Prismenarray so angeordnet, daß die den Ausgangskanalwellenleitern 6' des oberen Wellenleiterchips 1302 des Stapelelementes 1300 zugeordneten Ausgangskanäle Prismen 1400 zur Ableitung nach oben (d.h. in positive Z-Richtung) aufweisen, während aus den Ausgängen 6' des Wellenleiterchips 1301 entspringende Lichtbündel durch Prismen in negative Z-Richtung abgelenkt werden. Diese zusätzliche Umlenkung bewirkt eine bessere Signaltrennung zwischen aus dem Wellenleiterchip 1301 bzw. 1302 stammenden Lichtbündeln. Selbstverständlich ist es auch möglich, zusätzlich eine umlenkung in Y-Richtung vorzusehen, um die den einzelnen Ausgangskanälen 3' stammenden Lichtbündeln noch weiter voneinander abzulenken.

Die einzelnen Module Lichtquelle, Schaltoptik 13' sowie Umlenkoptik 1400 sind wie bei den vorherigen Varianten mit Umfassungs- bzw. Halteelementen auf dem Träger 12 fixiert.

Es ist selbstverständlich möglich, auch mehr als zwei Funktionsebenen vorzusehen, hierzu muß lediglich der Wellenleiterchip 1100 zur vertikalen Signalverteilung eine entsprechende Mehrzahl von Zwischenausgängen aufweisen. Auch bei einer Mehrzahl von Funktionsebenen kann die Schaltoptik 13' als integrierte Schaltung, als Stapelung einzelner Wellenleiterebenen vom Typ wie in Fig. 2 dargestellt oder als Stapelung von quasi freiraumoptischen Ablenkmodulen beispielsweise in elektro-optischen Kristallen, die in Dicken von wenigen 100 µm kommerziell erhältlich sind, ausgeführt sein.

## Patentansprüche

1. Schaltungsanordnung (1) zum Schalten und Einkoppeln mindestens eines Eingangslichtbündels (2) in mindestens einen Ausgangskanal (3) einer Mehrzahl von Ausgangskanälen, wobei das mindestens eine Einganslichtbündel in den Eingang einer Schaltoptik (13) eingekappelt wird, wobei die Schaltoptik als Schaltelemente Richtkoppler, Mach-Zehnder-Interferometer und/oder Y-Verzweiger aufweist, welche mit Ausgangskanalwellenleitern (6) der Schaltoptik verbunden sind, und eine der Schaltoptik (13) nachgeordnete Umlenkoptik (14) zur Zuführung zumindest eines Teils des Eingangslichtbündels in den mindestens einen Ausgangskanal vorgesehen ist, **dadurch gekennzeichnet, dass** die Umlenkoptik zur freiraumoptischen Umlenkung von Licht jedem einzelnen Ausgangskanalwellenleiter (6) der Schaltoptik (13) zugeordnete Linsen eines Linsenarrays (140a, 140b) und/oder zugeordnete Prismen eines Prismenarrays (142) aufweist.

2. Schaltungsanordnung nach Anspruch, **dadurch gekennzeichnet, dass** die Schaltoptik (13), die Umlenkoptik (14) und/oder die mindestens ein Eingangslichtbündel abstrahlende Lichtquelle (11) als Module zur Anbringung auf einem zu der Schaltungsanordnung gehörigen Träger (12) angeordnet sind.

3. Schaltungsanordnung nach Anspruch 2, **dadurch gekennzeichnet, dass** der Träger (12) eine integrierte Ansteuerelektronik und/oder integrierte elektrische Leitungen aufweist, welche mit den Einbauzustand der Module auf dem Träger elektrisch verbindbar sind.

4. Schaltungsanordnung nach Anspruch 2, **dadurch gekennzeichnet, dass** mehrere Lichtquellen (11) vorgesehen sind, welche Licht gleicher oder unterschiedlicher Wellenlänge emittieren.

5. Schaltungsanordnung nach Anspruch 2, **dadurch gekennzeichnet, dass** die mindestens eine Lichtquelle (11) eine Mikrooptik (115) zur Kollimation und/oder Reflexionsverminderung aufweist.

6. Schaltungsanordnung nach einem der vorhergehenden Ansprüche, **dadurch gekennzeichnet, dass** die Schaltoptik (13) eine Mikrooptik zur Kollimation und/oder Reflexionsverminderung aufweist.

7. Schaltungsanordnung nach einem der vorhergehenden Ansprüche, **dadurch gekennzeichnet, dass** die Strahlführung in der Umlenkoptik so erfolgt, dass sich der räumliche und/oder Winkelabstand zweier benachbarter, aus Ausgangskanalwellenleitern der Schaltoptik kommender Ausgangslichtbündel (131a, 131b, 3a, 3b) in mindestens einer Dimension vergrößert.

8. Schaltungsanordnung nach einem der vorhergehenden Ansprüche, **dadurch gekennzeichnet, dass** die Schaltoptik (13) mindestens zwei übereinander liegende, jeweils mit Schaltelementen (5) versehene Schaltebenen aufweist.

9. Schaltungsanordnung nach einem der vorhergehenden Ansprüche, **dadurch gekennzeichnet, dass** dieser eine erste Schaltoptik (13"), sich daran anschließend eine zugeordnete erste Umlenkoptik ( 14") mit Ausgangskanälen (3") sowie den Ausgangskanälen zugeordnet eine zweite Umlenkoptik (14'") und dieser nachgeordnet eine zweite Schaltoptik (13") enthält.

## Claims

1. Circuit (1) for switching and connecting at least one input lightbeam (2) into at least one output channel (3) of a plurality of output channels, and the at least one input lightbeam is connected into the input of a switching optical system, and the switching optical system comprises as switching elements directional connectors, Mach-Zehnder interferometer and/or Y-splitters which are connected to output wave guides (6) of the switching optical system, and a deflecting optics (14) downstream of the switching optical system (13) is provided for ducting at least a portion of the input lightbeam into the at least one output channel, **characterised in that** the deflecting optics comprises for the purpose of open space optical deflection of light lenses of a lens array (140a, 140b) associated with each individual output wave guide (6) of the switching optical system (13) and/or associated prisms of a prism array (142).

2. Circuit according to Claim 1, **characterised in that** the switching optical system (13), the deflecting optic (14) and/or the at least one input lightbeam deflecting light source (11) is arranged as a module for mounting onto a support which is part of the circuit.

3. Circuit according to Claim 2, **characterised in that** the support (12) comprises an integrated control electronics and/or integrated electrical conductors which are electrically connectible to the assembly state of the module on the support.

4. Circuit according to Claim 2, **characterised in that** a plurality of light sources (11) is provided which emit light of identical or different wavelengths.

5. Circuit according to Claim 2, **characterised in that** the at least one light source (11) comprises a micro-optics (115) for collimation and/or reflex reduction.

6. Circuit according to one of the above claims, **characterised in that** the switching optical system (13) comprises a micro-optics for collimation and/or reflex reduction.

7. Circuit according to one of the above claims, **characterised in that** beam guidance in the deflecting optics is carried out so that the spatial and/or angular distance of two adjacent output lightbeams (131a, 131b, 3a, 3b) emitted from output channel wave guides of the switching optical system enlarges in at least one dimension.

8. Circuit according to one of the above claims, **characterised in that** the switching optical system (13) comprises at least two stacked switching levels which are provided with switching elements.

9. Circuit according to one of the above claims, **characterised in that** it contains a first switching optical system (13"), adjacent thereto an associated first diverting optics (14") with output channels (3") as well as a second diverting optic associated with the output channels, and downstream thereof a second switching optical system (13").

## Revendications

1. Montage de circuit (1) permettant de commuter et de coupler au moins un faisceau lumineux entrant (2) sur/à au moins un canal de sortie (3) d'une multitude de canaux de sortie, où ledit au moins un faisceau lumineux entrant est couplé à l'entrée d'un circuit optique de commutation (13), le circuit optique de commutation comportant, comme éléments de commutation, des coupleurs directifs, des interféromètres Mach-Zehnder et/ou des répartiteurs en Y qui sont reliés aux guides d'ondes des canaux de sortie (6) du circuit optique de commutation, et où
un circuit optique de déviation (14) monté en aval du circuit optique de commutation (13) est prévu, permettant d'amener une partie au moins du faisceau lumineux entrant vers ledit au moins un canal de sortie,
**caractérisé en ce que** le circuit optique de déviation comporte, pour effectuer une déviation tridimensionnelle de la lumière, des lentilles d'un réseau de lentilles (140a, 140b) et/ou des prismes d'un réseau de prismes (142), respectivement associé(e)s à chacun des guides d'ondes des canaux de sortie (6) du circuit optique de commutation (13).

2. Montage de circuit selon la revendication 1, **caractérisé en ce que** le circuit optique de commutation (13), le circuit optique de déviation (14) et/ou la source de lumière (11) émettant au moins un faisceau de lumière entrant sont aménagés comme des modules conçus pour être montés sur un support (12) appartenant au montage de circuit.

3. Montage de circuit selon la revendication 2, **caractérisé en ce que** le support (12) comporte un circuit électronique intégré de pilotage et/ou des conducteurs électriques intégrés, qui, à l'état de montage des modules, peut/peuvent être électriquement connecté(s) aux modules montés sur le support.

4. Montage de circuit selon la revendication 2, **caractérisé en ce que** plusieurs sources de lumière (11) sont prévues, qui émettent de la lumière d'une même longueur d'onde ou de différentes longueurs d'ondes.

5. Montage de circuit selon la revendication 2, **caractérisé en ce que** ladite au moins une source de lumière (11) comporte un système microoptique (115) de collinéation et/ou de réduction de la réflexion.

6. Montage de circuit selon l'une des revendications précédentes, **caractérisé en ce que** le circuit optique de commutation (13) comporte un système microoptique de collinéation et/ou de réduction de la réflexion.

7. Montage de circuit selon l'une des revendications précédentes, **caractérisé en ce que** le guidage des rayons dans le circuit optique de déviation se fait de manière telle que la distance dans l'espace et/ou la distance angulaire entre deux faisceaux lumineux sortants (131a, 131b, 3a, 3b) contigus, sortant des guides d'ondes du canal de sortie du circuit optique de commutation, soit/soient accrue(s) dans au moins une dimension.

8. Montage de circuit selon l'une quelconque des revendications précédentes, **caractérisé en ce que** le circuit optique de commutation (13) comporte au moins deux plans superposés de commutation respectivement équipés d'éléments de commutation (5).

9. Montage de circuit selon l'une quelconque des revendications précédentes, **caractérisé en ce que** celui-ci comporte un premier circuit optique de commutation (13") suivi d'un premier circuit optique associé de déviation (14"), ayant des canaux de sortie (3"), et, associés aux canaux de sortie, un second circuit optique de déviation (14"') et un second circuit optique de commutation (13"') monté en aval de celui-ci.
